# EUROPEAN PATENT APPLICATION

(11) **EP 4 186 371 A1**
(43) Date of publication of application: **31.05.2023**
(21) Application number: 21211396.3
(22) Date of filing: 30.11.2021
(51) Int. Cl.: A23J 3/22, A23P 30/20

(54) **FOOD PRODUCT AND DEVICE AND METHOD FOR MANUFACTURING THE SAME**

(71) Applicant: Bühler AG, 9240 Uzwil (CH)
(72) Inventor: Mitchell, William Robert, 8050 Zürich (CH); Roberts, Ian David, 9524 Zuzwil (CH); Georget, Erika Sylvie, 8041 Zürich (CH)
(74) Representative: Hepp Wenger Ryffel AG

(57) **Abstract**

The present invention is related to a device (1) for the manufacture of a product that imitates properties of meat and fish and their role in diets, comprising an extruder (2) and a cooling die (4) arranged downstream of the exit (2c) of the extruder, characterized in that an inlet port (5) for the insertion of cellular material is provided in a region of the extruder (2) in the vicinity of the extruder outlet (2c) to the outlet of the cooling die (4), preferably between the exit (2c) of the extruder (2) and the outlet of the cooling die (4). The present invention is also related to a system (12) comprising said device (1), to a method for the manufacture of a product that imitates properties of meat and fish and their role in diets with said device 81) or system, and to a product that imitates properties of meat and fish and their role in diets.

## Description

The present invention is related to products that imitate properties of meat and fish and their role in diets, as well as to a device and method for manufacturing the same.

Innovative food products, such as products that imitate properties of meat and fish and their role in diets, that are based on vegetable proteins are becoming increasingly important as part of the sustainability trend.

A major challenge for the acceptance of such products is to match their texture, their nutrition quality, their color and their organoleptic properties (bite) as far as possible to the corresponding properties of real meat or fish products. However, products produced using the known methods and methods available on the market differ significantly from real meat in their texture, their nutrition quality, their color and their bite. This applies to the fibrousness as well as the tenderness or juiciness. In general, each innovative food product faces the same challenges as to texture, nutrition quality, color and bite, in order to ensure consumer acceptance.

A typical product that imitates properties of meat and fish and their role in diets is made using a vegetable (plant-based) protein by a method wherein the raw materials (including the vegetable protein) are weighed/dosed and mixed, optionally preconditioned, and subsequently processed in an extruder. Preferably, the thus obtained product is led out of the extruder through a cooling die and cut.

This is a very high-energy process in which thermal energy (heating the extruder housing and cooling water in a cooling die or introduction of steam into the system) and mechanical energy (specific mechanical energy input) are introduced. However, an increased supply of energy in the process inevitably leads to a stronger texturing, which in turn has a negative effect on the bite or the tenderness of the end product - the products have a rubber-like character.

In WO 2021/032866 A1, a method was described which results in the production of a foamed product that has improved characteristics over known food products that imitate properties of meat and fish and their role in diets.

It also known in the art to use cultured meat as alternative meat product. Cultured meat, also called synthetic meat, cell-cultured meat, clean meat, and in vitro meat, is meat grown in cell culture instead of inside animal (e.g. Verbeke et al., Journal of Integrative Agriculture 14.2 (2015): 285-294). For example, muscle cells are grown ex vivo attached to either a 2D or 3D support structure. However, the currently available cultured meat products have not yet gained wide acceptance, since they also exhibit the problems of texture, color and bite discussed above.

In WO 2018/189738 A1, a so-called hybrid food was proposed. A plant-originated substance was combined with an amount of cultured animal cells so as to enhance a meat organoleptic and/or meat nutritional property in the hybrid food. In the examples of WO 2018/189738 A1, the components were mixed with each other to obtain an emulsified mixture.

Such a manufacturing procedure and the resulting product are not comparable with an extrusion process and the product obtained therefrom, as is conventionally used for the manufacture of products based on vegetable proteins. It is not possible to subject an emulsified mixture as obtained in the examples of WO 2018/189738 A1 to subsequent extrusion, since the added cultured animal cells do not withstand the harsh conditions applied in an extruder.

It was the problem of the present invention to provide a product that imitates properties of meat and fish and their role in diets that overcomes the problems discussed above, as well as a device and method for manufacturing the same.

The above problem has been solved by the present invention.

In detail, the present invention is related to a device for the manufacture of a product that imitates properties of meat and fish and their role in diets, comprising an extruder and a cooling die arranged downstream of the exit of the extruder, characterized in that an inlet port for the insertion of cellular material is provided in a region of the extruder in the vicinity of the extruder outlet to the outlet of the cooling die, preferably between the exit of the extruder and the outlet of the cooling die.

According to the present invention, it has been found that a product that imitates properties of meat and fish and their role in diets, and that is based on a combination of vegetable proteins and animal cells, can be manufactured by an extrusion process if the cells are added downstream the section of the extruder where a high shear rate is applied onto the material in the extruder. In other words, the cells are added in a section where the shear rate of any screw elements present in said section is significantly reduced, or preferably in a section where no or only a negligible shear force is applied at all to the material.

According to the present invention, the terms "upstream" and "downstream" refer to the direction of flow of extrudate through the device. Said extrudate flows from an extruder inlet through an extruder exit, and subsequently to a distributor unit (if present) and a cooling die. Any component that is arranged upstream of another (second) component is arranged such that the extrudate flows through said component before it flows through the other (second) component. Any component that is arranged downstream of another (second) component is arranged such that the extrudate flows through said component after it has flowed through the other (second) component.

Extruders are generally known in the art. Reference is made, for example, to WO 2012/158023 A1 or to the extruders, in particular twin-screw extruders, from Bühler. Such extruders preferably have an L/D ratio (total length to screw diameter) in the range from 20 to 60, preferably 25 to 50, and particularly preferably 25 to 40. According to the invention, the extruders are preferably operated at 100 to 1000 rpm, more preferably at 300 to 500 rpm, and particularly preferably 350 to 400 rpm.

A suitable extruder comprises at least one unit for inserting material in a first section of the extruder. If different raw materials are to be introduced into the extruder, more than one such unit may be provided. The extruder can also have a water feed line and optionally a steam feed line.

The extruder comprises several sections, so-called barrel housings, in which material is processed and conveyed with the aid of at least one rotating screw. The screw elements used in the different barrel housings may be the same, but preferably are different in order to establish different processing conditions in the barrel housings.

The housing of the extruder is preferably temperature controlled. The composition is kneaded under pressure (usually 1 to 60 bar, preferably 8 to 20 bar, and particularly preferably 10 to 15 bar) to form a homogeneous mixture. This usually involves an energy input of 10 to 120 Wh/kg, preferably 15 to 30 Wh/kg. At the exit of the extruder, there is provided a cooling die in order to bring the extrudate below the boiling point of water, that is, to a temperature below 100 °C under normal conditions. Cooling dies for extruders are sufficiently known. The extrudate enters the cooling die through the exit of the extruder. According to a preferred embodiment of the present invention, the cooling die is a long cooling die, i.e. it has a length (defined as the length of a product flow channel through the die) that exceeds its width (defined as the longest dimension of a planar section vertically to the product flow channel).

Preferably, a distributor unit is provided between the extruder outlet and the cooling die. Said distributor unit provides for a uniform distribution of the extrudate exiting from the extruder outlet to the one or more extrudate flow channels in the cooling die. Especially preferred, said distributor unit is releasably arranged so as to be exchangeable.

Preferably, the distributor unit comprises a distribution element preferably designed as a cone. The design of said distribution element as a circular cone is particularly advantageous. It is also possible to design the distribution element as a truncated cone, in particular as a truncated circular cone. In the case of a cone or circular cone design, the distribution element can also be realized with a spherical section-shaped tip, whereby the flow behavior can be specifically influenced and adapted to the extrudate. The back pressure into the extruder can be influenced and the extent of shear of the product can be affected. The distribution element is preferably inserted in a recess of the distributor unit and is held in position in this recess by the pressure of the product flowing against the distribution element; interchangeability is particularly easy in this way.

In further preferred embodiments, an aperture can be arranged in the area of the end of the distributor unit facing away from the extruder and/or the end facing the extruder, with which the distribution channel(s) can be narrowed or constricted. Such apertures can in turn be used to specifically influence product properties, in particular the fibrousness; long and short fibers can be produced, but also amorphous or homogeneous structures. The thickness of the apertures in the main flow direction is in the range from 0.1 to 1.0 cm, preferably from 0.15 to 0.9 cm, particularly preferably from 0.2 to 0.8 cm.

The device of the present invention differs from conventional extruders by the provision of an inlet port for the insertion of cellular material in a region of the extruder in the vicinity of the extruder outlet to the outlet of the cooling die.

Preferably, said inlet port is configured in such a way as to withstand high pressures that may occur during conveying of a concentrated slurry. For example, any bolts of the inlet port may be sealed using an elastomeric sealing.

Said inlet port is configured so as to allow addition of cell-based material into the extruder. Preferably, said inlet port is configured such as to allow insertion of a slurry, especially a concentrated slurry, comprising cellular material.

In a preferred embodiment, said inlet port comprises a vessel for preparing a slurry. Such vessels are known and may have a volume of for example 500-5000 l, preferably 700-3000 l. Such a vessel comprises one or more inlets for the insertion of solid material, liquid material and of gas. Preferably, said vessel comprises a stirring unit. Also preferably, said vessel is temperature controlled, i.e. it can be adjusted to a desired temperature by conventional heating or cooling means.

From an outlet of said vessel, which is preferably provided in the bottom of said vessel, the slurry is conveyed through a line, such as a tube, into the extruder. Preferably, a conveying unit such as a positive displacement pump, preferably a vacuum pump or a twin-screw pump, is provided in said line so as to allow gentle conveying of a slurry, preferably a concentrated slurry. This is especially preferred in order to prevent any damage of cellular material to be inserted into the extruder.

According to a preferred embodiment of the present invention, the inlet port is provided and connected to the extruder in a releasable, hygienic and leakage-free manner. This is important in light of the susceptibility of biological material such as cells to be affected by contaminations. Suitable connections of the inlet port with the extruder are leakage-free couplings which prevent any leakage during the connection and disconnection operation, preferably by keeping the end of the line terminating in said connection closed, when the connection is in a disconnected state. In such way, material cannot exit from the line in the disconnected state, so that no contamination of the environment may occur. Also, no contamination may enter into the line of the inlet port where the material to be treated is conveyed, when the connection is in a disconnected state.

Moreover, said connection is preferably made from smooth surfaces of an easily cleanable and sterilisable material, such as stainless steel. Also preferably, the line of the inlet port where the material to be treated is conveyed is made from smooth surfaces of an easily cleanable and sterilisable material, such as stainless steel or a flexible hose made of food contact material. Especially preferred, the entire inlet port (including the vessel described above, if present) is made from smooth surfaces of an easily cleanable and sterilisable material, such as stainless steel.

The use of smooth surfaces also minimizes the shear profile of a slurry (or other material conveyed through the line of the inlet port).

Also preferably, a valve is provided between the line of the inlet port where the material to be treated is conveyed and the vessel described above, in order to prevent any material from going back into the vessel. This can be achieved by using a valve, for example a check-valve. Such as valve is preferably made of a plastic material such as polyether ether ketone (PEEK), for reasons of easy cleanability.

Especially preferred, the inlet port is designed such that it can be cleaned in place.

As described above, said inlet port for the insertion of cellular material is provided in a region of the extruder in the vicinity of the extruder outlet to the outlet of the cooling die. Preferably, the inlet port is provided in a region of the extruder selected from the group of regions consisting of a region which is in the last quarter of the extruder length in front of the extruder exit, a region of a distributor unit between the exit of the extruder and the cooling die, or in a region of the cooling die.

According to one preferred embodiment of the present invention, the inlet port for the insertion of cellular material is provided in a region of the extruder in the vicinity of the extruder exit. By "vicinity", here a region of the extruder is to be understood which is in the last quarter of the extruder length in front of the extruder exit. Preferably, said inlet port is arranged in the region of the last barrel housing of the extruder upstream (i.e. in front of) the extruder exit.

In said region of the extruder where the inlet port is provided, any shear rate of screw elements applied on the material to be extruder is significantly reduced or eliminated. If the inlet port is provided in a region of a distributor unit between the exit of the extruder and the cooling die, or in a region of the cooling die, this condition is met since in those regions no screw elements are provided at all, or preferably only screw elements are provided that serve as spacers and do not have substantial conveying or mixing capabilities, but at most very gentle conveying capabilities. If the inlet port is provided in a region in a region of the extruder in the vicinity of the extruder exit, this condition is met by providing in said region no screw elements at all or only screw elements that provide for gentle mixing and conveying, but do not provide for a high shear rate. Such screw elements are known. As an example, long spacer elements, wide-pitch conveying elements with reduced diameter, wide-pitch conveying elements with normal diameter, tighter-pitch conveying elements with undercut or normal flight, preferably with a right-hand configuration may be mentioned. Since the shear rate also depends on the process conditions such as the product throughput speed and screw speed applied in the extruder, under varying conditions different screw elements may be suitable. In principle, any screw element may be used in that region that does not damage cellular material inserted in said region.

According to another preferred embodiment of the present invention, in the region of the extruder in the vicinity of the extruder exit there may be provided a co-extrusion die, preferably with a mixing unit such as a static mixer. Such co-extrusion dies are generally known and typically comprise separate channels that merge at a point close to the exit of the co-extrusion die. According to the present invention, one channel is connected to the extruder and allows insertion of an extrudate from the extruder, whereas another channel is connected to an inlet port as described above. According to the present invention, in the co-extrusion die the extrudate stream and the cellular material, such as a concentrated slurry of cellular material, are combined and preferably mixed, more preferably using a static mixer. According to another preferred embodiment of the present invention, the inlet port is provided in a region of a distributor unit between the exit of the extruder and the cooling die. In other words, the inlet port is connected to and enters into the distributor unit. Distributor units have been described above. A distributor unit suitable for the present invention is configured such that an inlet port as described above may be connected to said distributor unit, and that a channel from said connection point is provided that merges with the one or more channels in the distributor unit through which the extrudate is conveyed.

According to another preferred embodiment of the present invention, the inlet port is provided in a region of the cooling die. In other words, the inlet port is connected to and enters into the cooling die. Cooling dies have been described above. A cooling die suitable for the present invention is configured such that an inlet port as described above may be connected to said cooling die, and that a channel from said connection point is provided that merges with the one or more channels in the cooling die through which the extrudate is conveyed. Preferably, the inlet port may have the configuration of a plurality of openings that are arranged on the cooling die, preferably over the entire circumference of a cylindrical cooling die. For example, 5-10 openings (such as valves, preferably regulation valves that are controlled via a controller through an automation system) are arranged over the entire circumference of a cylindrical cooling die, so as to allow a homogeneous insertion of the cellular material into the extrudate flow channel in the cooling die. The plurality of openings may be connected to the vessels via suitable pipes or hoses. A slurry pump, for example a vacuum-assisted twin screw pump, and/or additional valves and/or detectors such as flow meters may be provided in these pipes or hoses, so as to allow selective manipulation of individual lines or hoses for a controlled insertion of cellular material into the cooling die. According to a preferred embodiment, said plurality of openings may be combined in a single unit that can be connected around the circumference of a cylindrical cooling die.

According to another preferred embodiment of the present invention, a heat exchange unit is provided upstream (in the section of the extruder in front of) of the inlet port for the insertion of cellular material.

Depending on the processing conditions applied in the extruder, a significant amount of heat may be generated, and said heat may cause damage on cellular material to be inserted through the inlet port. The provision of a heat exchange unit in a region before the cellular material enters through the inlet port serves for cooling the extrudate to a level that is acceptable for cellular material.

According to this preferred embodiment of the present invention, one or more heat exchange units, for example 1-5, preferably 1-3 heat exchange units may be provided in series in a region before the cellular material enters through the inlet port.

Heat exchange units are known in the art. For example, reference can be made to shell-and-tube heat exchangers such as tubular heat exchangers. This is a device in which the material is led through narrow channels and thereby subjected to a homogeneous heat or cooling treatment. According to a preferred embodiment, a heat exchanger is used which has channels through which material can be led from a first side of the heat exchanger through an elongated, preferably cylindrical section to a second side of the heat exchanger.

According to another preferred embodiment of the present invention, a screw element arranged in the product stream in the extruder adjacent to the exit of the extruder or adjacent to the region where inlet port for the insertion of cellular material is provided is designed so as to enable a pressure reduction downstream of said screw element.

Depending on the processing conditions applied in the extruder, a significant amount of pressure may be generated, and said pressure may cause damage on cellular material to be inserted through the inlet port.

A pressure reduction can thus be necessary, so as to provide pressure conditions in a region where the inlet port is provided that are not detrimental for cellular material.

According to a preferred embodiment of the present invention, said pressure reduction can be achieved by providing at least one screw element upstream of the inlet port that is configured such that it evokes a desired pressure reduction. Preferably, such a screw element may act as a lock for any hot gas, so that no hot gas may enter the region where the inlet port is provided. For example, undercut conveying elements may be used for this purpose. Such screw elements are known. Reference is made, for example, to left-handed screw elements.

According to a preferred embodiment of the present invention, the cooling die and optionally the distributor unit and heat exchange unit are releasably provided at the exit of the extruder. This allows retrofitting of a conventional extruder to an extruder with an inlet port provided, for example, in a region of a distributor unit between the exit of the extruder and the cooling die, or in a region of the cooling die.

Accordingly, the present invention is also related to a method for retrofitting an extruder so as to obtain a device according to the present invention, comprising the step of providing at the exit of the extruder either a cooling die comprising an inlet port for the insertion of cellular material, or a combination of a distributor unit comprising an inlet port for the insertion of cellular material and a cooling die.

Releasable attachment of the above components to the extruder can be realized as known in the art, for example by screw connections, clamping connections or threaded bolts.

According to a further preferred embodiment of the present invention, the extruder may be provided with a feed opening for inserting gas into the extruder. Such an extruder is described in WO 2021/032866 A1. Preferably, said feed opening is connected to a gas container (such as a pressure bottle) and allows a controlled introduction of gas into the extruder (for example, via a regulation valve).

According to the invention, the feed opening for the gas is preferably located in a section of the extruder which is located in the vicinity of the cooling die (that is, at the extruder outlet), preferably in the last third of the extruder length in front of the cooling die, particularly preferably in the last quarter of the extruder length in front of the cooling die. It is particularly preferred that said feed opening is located upstream (in front of) the inlet port, so that first gas and then cellular material may be inserted into the extruder.

After the material has left the device of the present invention, through the cooling die exit, it may be subjected to one or more post-processing steps. One or more additional units may be provided for carrying out such post-processing steps.

Accordingly, the present invention is also related to a system for the manufacture of a product that imitates properties of meat and fish and their role in diets, comprising a device according to the present invention and at least one unit arranged downstream of the device for performing further processing steps.

According to a preferred embodiment of the present invention, the at least one unit arranged downstream of the device for performing further processing steps may be selected from the group consisting of a cutting unit, a cooling unit, an incubation unit, an injection unit and a finishing unit.

Such units are known in the art. Any such unit conventionally used for the post-processing of an extrudate is suitable for the present invention.

Preferably, the system according to the present invention is provided at one single location, for example in one building and preferably in the same room. If more than one unit for performing further processing steps is provided, it is preferable that the device according to the present invention and the units for performing further processing steps are arranged in a processing line, so that the extrudate may be conveyed with least or no interruption from the device to a first unit and then to any subsequent unit.

According to a preferred embodiment, after the device of the present invention there are arranged in the following order as a processing line, a cooling unit, followed by a cutting unit, followed by an injection unit (or vice versa, such as an injection unit followed by a cutting unit and a cooling unit), followed by an incubation unit, followed by a finishing unit.

Preferably, the extrudate is conveyed to said at least one unit, or from one unit to another unit, via one or more conveying belts. However, any other means for transporting the extrudate is suitable, for example mobile hoppers on wheels.

For example, a similar incubation unit as used for the incubation of eggs, preferably chicken eggs, may be used. Such incubation systems are known (e.g. https://www.intelligentagri.com.tw/ en/xmdoc/cont?xsmsid=0J170506304287007902&sid=0J1924876764426262 14) and characterized by separate incubators provided that can be moved on wheels or any other conveying system. In said incubators, suitable incubation conditions can be adjusted. However, also other conventionally known incubators may be used. Reference may be made, for example, also to a bio-fermentation tank.

In the incubation unit, the cellular material in the extrudate may be cultivated to a desired state. For example, incubation may be carried out under conditions that permit growth of cells in the extrudate.

Such incubation conditions are known and vary depending on the material to be processed.

Cutting units for cutting an extrudate are also known in the art. The cutting unit may be either provided directly at the extruder, at the outlet of the cooling die, or alternatively as a separate unit.

Cooling units for cooling an extrudate are also known in the art. Depending on the nature of the extrudate, conventionally cooling units may be used that cause a quick cooling or even freezing of the extrudate, such as a unit where the extrudate is quickly conveyed into a bath of cold water. In cases where the extrudate is very sensitive (e.g. due to the presence of sensitive cellular material), a cooling unit may be used that provides for a gentler (e.g. less rapid) cooling effect. For example, the extrudate may be conveyed through a cooling unit at a certain speed, wherein in said cooling unit a specific temperature gradient is set so that the extrudate is gradually cooled to the desired temperature. In one embodiment, the cooling unit may comprise cooling jets arranged above a conveying belt, so that cooling may take place during conveying of the extrudate from one unit to another, or preferably from the device of the present invention to a unit.

Injection units for injecting components into an extrudate are also known in the art. For example, the injector IMXA from JBT may be mentioned. Preferably, the components are injected into the extrudate via needles. Preferably, said injection unit is arranged downstream of a cooling unit, so that any further components are added to the extrudate after it has been cooled to a desired temperature, such as room temperature (25°C).

The provision of an injection unit is preferred if in addition to the cellular material that it inserted into the extrudate through the inlet port of the device of the present invention, further components should be added. Those further components may be additional cellular material, for example growth factors, flavoring components, nutrients (e.g. vitamins), colorants, oils like algae oil, reducing agents (antioxidants) or other additives commonly used for food products. Preferably, said further components are sensitive to extrusion conditions.

If an injection unit and an incubation unit are provided, the injection unit is preferably arranged upstream the incubation unit, so that any further components are added to the extrudate before incubation occurs.

Finishing units for finishing an extrudate are also known in the art. Such units may provide for marinating, enrobing or encasing a product, for example.

In enrobing or encasing, a product is surrounded with a layer of a suitable material for providing a barrier effect or another desired effect (such as desired visual appearance or flavor). For example, the material may be subjected to a "waterfall" of a calcium chloride solution that may contain a hydrocolloid or a protein, e.g. alginate, for providing a physical barrier layer, and preferably also a fat-mimetic layer that resembles the outer structure of a steak. Alternatively, the material may be put into a suitable bath on a conveying system. Such enrobing or encasing may be carried out using machines as are conventionally used for chocolate enrobing.

Marination of a product may be carried out by conveying the material together with the marinade composition into a vacuum tumbler, and blend it for a sufficient period of time and suitable conditions.

With the device and system of the present invention described above, a method may be performed for manufacturing a product that imitates properties of meat and fish and their role in diets.

Accordingly, the present invention is also related to a method for the manufacture of a product that imitates properties of meat and fish with a device or a system according to the present invention, comprising the steps of:
a) metering raw materials into an extruder, wherein at least one raw material is a protein, preferably a vegetable protein, insect protein, cell protein including single cell protein, such as of yeast, bacteria, microalgae, fungi, fermented products derived from fermentation involving any of the above-mentioned organisms, mold and the like, or a mixture of different proteins, wherein the protein content in the dry raw materials is 35 to 90%, preferably greater than 50 % and is particularly preferably in the range from 60 % to 90 %;
b) mixing the raw materials in the extruder to produce a mixture,
c) extruding the mixture to produce an extrudate,
d) inserting cellular material that would be adversely affected by the extrusion conditions applied in step c) into the extrudate in a region of the extruder in the vicinity of the extruder outlet to the outlet of the cooling die, preferably between the exit of the extruder and the outlet of the cooling die,
e) leading the extrudate out through the cooling die while cooling the extrudate to a temperature of less than 100 °C,
so as to obtain a product that imitates properties of meat and fish.

According to a preferred embodiment of the present invention, in step c) pores are formed in a controlled manner in the extrudate by providing a gas in the extruder, so as to obtain a foamed product.

According to the present invention, raw materials are metered into an extruder, wherein at least one raw material is a protein, preferably a vegetable protein, insect protein, cell protein, such as of yeast, bacteria, microalgae, mold and the like, or a mixture of different proteins. The term "wherein at least one raw material is a protein" also encompasses embodiments in which the raw material contains a protein or constitutes a protein source.

Plants are preferably used as protein sources, for example, legumes (such as peas, lupins or beans, for example, fava beans), cereals (such as wheat, soybeans, rapeseed or sunflowers), or algae. For example, insect proteins, cell proteins, especially from yeast, bacteria, microalgae, mold and the like can also be used.

According to the present invention, the raw materials preferably comprise at least one component which has a fiber content. Pea fibers which have a fiber content of at least 50 % of their dry weight may be mentioned by way of example.

The protein-containing raw materials are dosed into the extruder together with a liquid. As stated above, this is at least one protein-containing raw material as described above and one liquid as described above. Optionally, a gas-forming compound and a gas-releasing compound can be added if the gas is to be provided by releasing the gas via a chemical reaction of these compounds.

Water, bouillon and/or an oil-containing substance such as an oil-containing flavoring component can be used as liquids.

According to the invention, the protein-containing raw materials and the liquid are metered in such a ratio that the protein content in the dry raw material is greater than 50 % and is particularly preferably in the range from 60 % to 90 %. Accordingly, any optional starch content (carbohydrate content) in the dry raw material is no more than 50 %, preferably in the range from 5 to 30 %.

In addition, additives commonly used for the production of alternative meat products can be added. For example, salts such as sodium chloride, pH regulators, fats, oils or other lipids can be added, preferably in an amount of 0.1 to 10 % by weight, based on the total weight of all dry raw materials.

The previously weighed raw materials are metered into a first section of the extruder. Alternatively, the different raw materials can also be added to the extruder sequentially in different sections.

One or more of the raw materials can be preconditioned before step a) of metering into the extruder. The residence time of the protein matrix in the process can be influenced in this way. It is currently assumed that a longer residence time leads to an improved fibrous protein structure, since an increased number of cross-linked filaments are then produced during extrusion. According to the invention, the residence time in the preconditioner is preferably 3 to 600 s, particularly preferably 3 to 60 s, particularly preferably 5 to 15 s.

The metered raw materials are mixed with one another in the extruder, so that a liquid, preferably aqueous, protein composition is formed. The mixer can be configured as a high-speed mixer. It can have a water and steam feed line. The extruder can have a water feed line and optionally a steam feed line.

The liquid, preferably aqueous, protein composition is processed in the extruder. The composition here is heated above the denaturation temperature of the protein, preferably to a temperature in the range from 80 to 180 °C, more preferably 120 to 160 °C, particularly preferably 130 to 150 °C, depending on the protein used. The housing of the extruder is preferably temperature controlled. The composition is kneaded under pressure (usually 1 to 60 bar, preferably 8 to 20 bar, and particularly preferably 10 to 15 bar) to form a homogeneous mixture. This usually involves an energy input of 10 to 120 Wh/kg, preferably 15 to 30 Wh/kg.

The method according to the present invention can, in principle, be operated with a throughput in the range from 10 to 1000 kg/h. According to the present invention, the process is preferably performed with a throughput of 10 to 60 kg/h, preferably 20 to 50 kg/h and particularly preferably 30 to 40 kg/h, or alternatively with a throughput of 100 to 600 kg/h, preferably 300 to 600 kg/h and particularly preferably 400 to 550 kg/h, wherein the material in the extruder preferably has a residence time of at least 2 minutes, preferably at least 4 minutes.

According to a preferred embodiment of the present invention, controlled pore formation in a foamed food product and an associated adaptation of the product properties to the properties of real meat or fish can be achieved by providing a gas in an extruder during the extrusion process. The pore formation is controlled by the method according to the invention, since a specific control of the pore formation process, in particular of pores which are at least partially interconnected, is possible by providing a specific amount of gas.

According to the present invention, a gas is understood to mean a substance which is gaseous under normal conditions (1 bar, 20 °C). Examples of gases which can be used according to the present invention are CO₂, N₂, N₂O, NH₃ or SO₂. The present invention also encompasses gases that are stored under pressure in a liquid state and return into the gas state when being introduced into the extruder.

According to a preferred embodiment of the present invention, a gas is provided in the extruder in order to achieve a controlled pore formation in the treated material. This provision can take place by
- introducing the gas into the extruder via a feed opening, and/or
- releasing the gas in the extruder by a reaction between a gas-forming compound added as a raw material with a gas-releasing compound added as a raw material.

According to one embodiment of the present invention, the raw materials therefore may contain at least one gas-forming compound and at least one gas-releasing compound. During the extrusion in step c), a gas is formed by a chemical reaction of the gas-forming compound with the gas-releasing compound.

According to the invention, a gas-forming compound is understood to mean a substance which, under the conditions prevailing in the extruder, is reacted with a suitable gas-releasing compound to release a gas. Typical examples of a gas-forming compound are physiologically acceptable salts such as carbonates or hydrogen carbonates, for example, sodium carbonate (Na₂CO₃), potassium carbonate (K₂CO₃), or sodium hydrogen carbonate (NaHCO₃), from which CO₂ can be released. Another example is staghorn salt (a mixture of ammonium hydrogen carbonate (NH₄HCO₃), ammonium carbonate ((NH₄)₂CO₃) and ammonium carbamate (NH₄CO₂NH₂)), from which the gases NH₃ and CO₂ can be released.

A gas (particularly preferably CO₂) can be released from these gas-forming compounds by reaction using a gas-releasing compound. This can be any chemical compound that reacts with the corresponding gas-forming compound to form gas. The gas-releasing compound is usually a physiologically acceptable acid. The acid can be, for example, citric acid, a phosphoric acid compound such as disodium dihydrogen diphosphate or monocalcium orthophosphate, tartaric acid or one of its salts (such as potassium sodium tartrate (Rochelle salt)), malic acid, fumaric acid, adipic acid or glucono delta-lactone. The acids can be used as free acids or in the form of their anhydrides or salts.

According to a preferred embodiment of the present invention, the gas to be provided is preferably produced in this embodiment by an acid-base reaction in the extruder. For example, the gas carbon dioxide (CO₂) can be produced by reaction of the salt sodium hydrogen carbonate (NaHCO₃) with citric acid (C₆H₈O₇).

The texture of the extrudate can be influenced in a targeted manner by a suitable choice of the gas-forming compound and the gas-releasing compound, preferably the salt and the acid, and their proportions by weight. A controlled inclusion of a second phase and possibly further phases is made possible in this way. This ensures an improved absorption of water or flavoring components such as bouillons, fats or oils, which has a positive effect on the bite behavior of the extrudates.

The gas-forming compound and the gas-releasing compound, preferably the salt and the acid, can be added to or are added to dry raw materials which are metered into the extruder. Alternatively, the acid can also be fed separately to the extruder in liquid form.

The gas-forming compound and the gas-releasing compound are preferably present together in the raw materials in a proportion of 0.1 % by weight to 5 % by weight, particularly preferably 0.2 % by weight to 1.6 % by weight, based on the total weight of all raw materials metered into the extruder. The mass ratio of gas-forming compound to gas-releasing compound, preferably salt to acid, depending on the stoichiometric ratios of the corresponding reaction, is preferably in the range from 1:1 to 6:1 in order to achieve the most complete gas release possible.

According to a further embodiment of the present invention, the gas is provided in the extruder by introducing the gas into the extruder. According to this embodiment of the present invention, at least one gas is thus introduced into the extrudate during the extrusion in step c). This is usually done through a feed opening of the extruder, as described above.

Examples of gases which can be used according to the invention in this embodiment are CO₂, N₂, N₂O, NH₃ or SO₂, preferably CO₂ or N₂. The gas can be introduced in the gaseous state or alternatively as a liquefied gas.

The introduction of a gas also ensures controlled pore formation. If SO₂ is used, there is a possible formation of disulfide bridges with the proteins contained in the raw material, which results in an additional influence on the texture of the product. The gas can, for example, be introduced into the extruder in an amount of 0.01 to 5 % by weight, preferably 0.05 to 2.5 % by weight, based on the total weight of the raw materials metered into the extruder. For example, the gas may also be introduced in a quantity of 0,5 to 3,0 g (grams), preferably 1,0 to 1,5 g, of gas per kg (kilogram) of raw materials extruded in the extruder, after they have left the extruder.

According to a preferred embodiment of the present invention, the gas is preferably introduced into the extruder at a pressure in the range from 10 to 50 bar, preferably 15 to 30 bar. According to the present invention, the extrudate, at the position of the feed opening for the gas in the extruder, has a temperature in the range from 80 to 180 °C, preferably 120-170 °C, particularly preferably 130 to 160 °C.

In a subsequent step d) of the method of the present invention, cellular material is inserted into the extrudate in a region of the extruder in the vicinity of the extruder outlet to the outlet of the cooling die, preferably between the exit of the extruder and the outlet of the cooling die.

According to the present invention, the term "cellular material" is related to cellular material that would be adversely affected by the extrusion conditions applied onto the raw material described above, and includes intact cells of either prokaryotic or eukaryotic nature, including animal cells and plant cells, bacteria, yeasts, fungal cells and their spores, microalgae, portions/constituents of a cell such as hem of erythrocytes or proteins, as well as products of cellular reactions, i.e. reactions taking place in an intact cell. In particular, the cellular material is related to intact cells that remain intact during the method of the present invention. This can be detected, for example, using light microscopy.

According to the present invention, the term "would be adversely affected by the extrusion conditions applied onto the raw material" means any effect on the cellular material that would result in a loss of a property of said material that is desired in the final product, said loss being caused by said extrusion conditions. Examples of such effects are loss of intactness of a cell, loss of flavour components or precursors, or loss of nutritional components.

The cellular material that is to be inserted into the extrudate can be animal cells selected from the group consisting of hepatocytes, myoblasts, osteoblasts, fibroblasts, lipoblasts, odontoblasts, adult neuronal progenitor cells, neural stem cells, multipotent stem cells from subventricular forebrain region, ependymal-derived neural stem cells, hematopoietic stem cells, liver-derived hematopoietic stem, marrow-derived stem cell, adipo-fibroblasts, adipose-derived stem cells, islet-cells producing stem cells, pancreatic-derived pluripotent islet-producing stem cells, mesenchymal stem cells, placenta cells, bone marrow stromal cells, muscle side population cells, bone marrow-derived recycling cells, blood-derived mesenchymal precursor cells, bone-marrow derived side population cells, muscle precursor cells, circulating skeleton stem cells, neural progenitor cells, multipotent adult progenitor cells, mesodermal progenitor cells, spinal cord progenitor cells and spore-like cell, and any combinations thereof. Those animal cells can be cultured or non-cultured cells.

As used herein, the term "animal cells" includes cells derived from fish and other marine animals.

The cellular material is inserted in any suitable way. Preferably, a dispersion (such as a slurry) of cellular material in a suitable liquid (preferably water) is prepared and conveyed through the inlet port into the desired region of the device.

According to a preferred embodiment of the present invention, as described above the inlet port comprises a vessel for preparing a dispersion such as a slurry. As described above, for example a volume of for example 500-5000 l, preferably 700-3000 1 of such a dispersion may be prepared in said vessel. The dispersion can be prepared by adding a liquid, preferably water, and the cellular material into the vessel. In said vessel, conditioning of the mixture may be performed, for example by stirring or by introducing a gas such as steam (water vapor) into the vessel, or by adjusting the mixture to a desired temperature by conventional heating or cooling means.

If a concentrated slurry is to be provided, a concentration step may be performed by removing at least a portion of the liquid phase, for example by evaporation of the liquid or reverse osmosis.

The thus obtained dispersion, e.g. slurry, preferably concentrated slurry, is conveyed into the desired region of the device of the present invention, as described above. Preferably, conveying is performed using a vacuum pump in order to realize gentle conveying. Such conveying methods are known.

In a further step e) the extrudate is led out of the extruder through a cooling die in order to bring the extrudate below the boiling point of water, that is, to a temperature below 100 °C under normal conditions. According to the invention, the extrudate is preferably cooled to a temperature in the range from 50 to 95 °C.

According to a preferred embodiment, the method according to the invention is used for the production of wet texturates. A wet texturate is understood to mean an extrudate in which the solids content of the extrudate in step c) is in the range from 20 wt.-% to 60 wt.-%, preferably in the range from 30 wt.-% to 50 wt.-%. The remaining 80 to 20 wt.-%, preferably 70 to 45 wt.-%, especially preferred 65 to 55 wt.-%, are one of the liquids mentioned above, preferably water. For wet texturates, it has proven to be advantageous when the protein content in the dry raw materials is greater than 50 wt.-% and is particularly preferably in the range from 60 wt.-% to 90 wt.-%. Preferably, the resulting product has a protein content in the range from 15-30 wt.-%, preferably 19-23 wt.-%.

According to another embodiment, the method according to the invention is used for the production of dry texturates. A dry texturate is understood to mean a texturate in which the solids content of the extrudate in step c) is in the range from 60 wt.-% to 90 wt.-%, preferably in the range from 65 wt.-% to 75 wt.-%. For dry texturates, it has proven to be expedient when the protein content in the dry raw materials is in the range from 35 wt.-% to 90 wt.-%.

All above indicated wt.-% are with respect to the entire amount of the respective texurate.

According to a preferred embodiment of the present invention where a foamed product is obtained by introduction of a gas described above, the dispersed gas fraction and the gas bubble size / size distribution have a quantitative influence on the texture properties (for example, "bite and chewing properties" such as tenderness, hardness, chewability) and make it possible to adapt these sensory properties by adapting the structural parameters to the dispersed gas phase. It is assumed that an increase in the gas fraction (up to a matrix-specific critical value) and a reduction in the bubble size (with a constant gas volume fraction) lead to a stiffening of the structure. This leads to an increase in hardness, which is expressed by the maximum force required to start the structural break when cutting/biting, but increases the deformation required for the break and thus influences the chewability. Accordingly, the foaming of the matrix expands the spectrum of tools for adapting, for example, meat-analog bite/chewing properties from chicken to beef and beyond.

Also, the foaming provides for pores in the extrudate into which the cellular material may be inserted that is added via the inlet port, as described above.

The method according to the present invention is conducted at a temperature where denaturation of the proteins present in the raw material takes place. Also, the method according to the present invention is conducted at a temperature where any optionally present starch crystalline units become amorphized ("gelatinization"). According to the present invention, in the extruder a temperature is applied which is, for example, in the range from 80 °C to 180 °C, preferably in the range from 120 °C to 170 °C, particularly preferably in the range from 130 to 160 °C. It is understood that a temperature gradient may be applied over the length of the extruder. In the methods described in the art, lower temperatures are used in order to avoid denaturation of the proteins or "gelatinization". Also, bread doughs are typically not extruded through a cooling die, but rather subjected to subsequent baking processes in order to solidify their structure.

According to a preferred embodiment of the present invention, the product that imitates properties of meat and fish and their role in diets of the present invention has an amount of cellular material in the range of 0.01-60 wt.-%, preferably 0.5-30 wt.-%, more preferably 1-25 wt.-%, even more preferably 5-20 wt.-% and especially preferred 10-15 wt.-%, based on the entire amount of the product. The remaining 99.99-40 wt.-%, preferably 99.5-70 wt.-%, more preferably 99-75 wt.-%, even more preferably 95-80 wt.-% and especially preferred 90-85 wt.-%, based on the entire amount of the product, is extrudate from the raw material used in step a) of the method of the present invention.

According to the invention, protein-containing food products (that is, foods having a protein content of more than 50 % dry weight) can be produced which correspond, for example, to meat products in their texture, color and bite, more than protein-containing foods from the prior art. However, according to the present invention also other protein-containing food products (having a protein content of more than 50 % dry weight) can be provided. For example, mousse-like food products with a higher structural stability than real mousse can be obtained.

Particularly advantageous protein-containing food products can be obtained by the method according to the invention involving the step of introducing gas into the extrudate.

Products produced by the method according to the invention using the addition of a gas-forming and a gas-releasing substance typically have a maximum overrun (that is, a height exceeding the height of the extruder outlet and thus an enlarged volume of the sample) of 150 %, preferably 100 %, and/or homogeneously distributed pores having a diameter of about 0.005-2.3 mm, preferably 0,1-1 mm, more preferably 0,2-0,7 mm, with a narrow size distribution.

Products produced according to the invention using the introduction a gas typically have a maximum overrun (that is, a height exceeding the height of the extruder outlet and thus an increased volume of the sample) of 150 %, preferably 100 %, and/or homogeneously distributed pores having a diameter of approximately 0.005-2.3 mm, preferably 0.1-0.3 mm, with a narrow size distribution.

According to the present invention, "narrow size distribution" means that the diameter of at least 80%, preferably at least 90% of the individual pores only deviates by 0,1-10%, preferably 0,2-5%, from the values indicated above.

The average area of a pore or a cavity (i.e. a void formed by several interconnected pores) is 21'292 ± 36'110 µm² with an average minimum and maximum diameter of 125 ± 73 µm and 239 ± 153 µm, respectively.

The pores and the pore distribution can be analyzed by microscopy or x-ray tomography or mercury porosimetry, as known in the art.

The product produced according to the present invention is further characterized by a fibrillar, porous, longitudinally oriented and cross-linked structure.

The product produced according to the present invention is further distinguished by a porous structure having closed cavities and homogeneous distribution of the cavities. The cavities preferably have a diameter of 100-300 µm with a normal deviation in the range of 50-70 %. As used herein, closed cavities are areas that have a defined continuous boundary. They may be formed from interconnected pores.

The products according to the present invention are characterized by a specific texture. These products have longitudinally oriented layers that are positioned around a central cavity. Preferably, these layers are not placed very compactly alongside one another, but are interrupted by small cavities. This results in a porous structure. According to a preferred embodiment of the present invention, the inventive foamed food products when drying out exhibits clearly recognizable individual layers that do not fall apart from one another, but are linked to one another at some points. The fibrillar structure is oriented longitudinally, corresponding to the die used in the manufacturing process, i.e. "longitudinally" (and likewise "perpendicularly") refer to the direction of product flow out of the cooling die.

The products according to the present invention are characterized by a maximum force (peak force) which is required to break up the structure of the products during cutting or biting, which is in the range from 10-50 N, preferably 15-40 N, more preferably 12-20 N, in longitudinal direction (F_{L}) and in the range from 10-90 N, preferably 15-70 N, and more preferably 15-50 N, in transversal direction (F_{T}).

The maximum force can be determined using a Warnzer-Brazler blade set with a "V" slot blade of a specific thickness (https://textureanalysisprofessionals.blogspot.com/2014/12/- texture-analysis-in-action-blade-set.html). This analysis helps to quantify the cutting or biting property of the product. All texture analysis measurements are made at room temperature of 25°C. Product is taken directly out of the cooling die and vacuum packaged in sealed plastic bags, and cooled in a refrigerator for no more than 6 hours prior to analysis.

The blade set comprises a reversible blade, a slotted blade insert and a blade holder. The reversible blade has a knife edge at one end and a flat guillotine edge at the other. In operation, the blade is firmly held by means of the blade holder which screws directly into a Texture Analyser. The slotted blade insert is located directly in a platform and acts as a guide for the blade whilst providing support for the product.

The products according to the present invention are cut transversally (right-angled to the flow direction of the extruded strand (F_{T}) as well as cut parallel to the flow direction of the extruded strand (F_{L}), and the respective maximum force (peak force) can be determined using the above Warnzer-Brazler blade set and expressed in Newtons (N).

The products according to the present invention show a pronounced anisotropy with respect to their mechanical properties, i.e. their F_{T} and F_{L} values. The anisotropy index can be calculated from the ratio of the F_{T} and F_{L} values (A=F_{T}/F_{L}) and represents a measure of the fibrousness of the product.

Generally, for the products according to the present invention the F_{L} values are lower than their F_{T} values, so that the protein-containing foamed food products according to the present invention exhibit an anisotropy index of >1, preferably > 2, especially preferred in the range from 2-2.5, even more especially preferred between 2.1-2.4.The protein-containing foamed food product according to the present invention can be used as a basis (matrix) for cell cultivation because its porous structure has a beneficial effect on the growth of cells and the protein-containing foamed food product can also contain nutrients or other components suitable for cell cultivation, which can be e.g. provided in the pores of the foamed food product.

The invention is explained in more detail in the following on the basis of a few non-limiting exemplary embodiments and non-limiting drawings.

### A. Production of wet texturates

An extruder described above can be used as the extruder, for example, the PolyTwin BCTL-42 32L/D extruder from Bühler.

Depending on the proteins used, the housing of the extruder is set to a temperature which is, for example, in the range from 80 °C to 180 °C, preferably in the range from 120 °C to 160 °C, particularly preferably in the range from 130 to 150 °C. In this case, the housing of the extruder can be set to different temperatures, for example, in an entrance region to 120 °C, in a middle region to 160 °C and in an exit region to 140 °C.

The protein content in the dry raw materials is greater than 50 % and is particularly preferably in the range from 60 % to 90 %. For example, vegetable proteins such as legumes or wheat protein can be used as proteins, but animal proteins such as milk protein can also be used. Furthermore, insect proteins or cell proteins, in particular from yeast, bacteria, microalgae, mold and the like, or a mixture of different proteins can be used. The extrudate can contain water, bouillon and/or an oil-containing flavoring component as liquids. The liquid particularly preferably has a temperature in the vicinity of its boiling point.

The dry raw materials are metered into the extruder where they are kneaded together with the liquid into a homogeneous composition under pressure and action of temperature (for example, in the range from 1 bar to 50 bar, preferably 8 bar to 20 bar, particularly preferably 10 bar to 15 bar). All pressures are understood to be gauge pressure. In the course of the method, the proteins are unfolded and align themselves into cross-linked filaments as they enter the cooling die. The composition heats up in the course of the process from ambient temperature to the temperature necessary for the denaturation of the proteins. For soy proteins, for example, this is around 140 °C. A processing temperature of 120 °C has proven suitable for pea proteins or sunflower proteins. Depending on the quality of the raw material, 160 °C may also be necessary.

Cellular material is added to the extrudate, as described above, at the desired region.

The extrudate is passed through a cooling device, for example, a cooling die, when leaving the extruder. This has the task of bringing the composition to a temperature level below the boiling point prevailing according to the ambient conditions, for example, to a temperature in the range from 50 °C to 90 °C. In order to achieve this, cooling water having a temperature in the range from 40 °C to 90 °C, preferably 50 °C to 70 °C, is used in the cooling die.

In order to achieve improved wall sliding in the cooling die and thus easier process control, oil can be injected into a distribution body of the extruder and/or into the cooling die itself, for example, in a proportion in the range from 1 % to 10 %, preferably in the range from 2 % to 6 %, particularly preferably in the range from 3 % to 4 %, based on the total weight of all raw materials metered into the extruder. For example, an edible oil such as sunflower oil is used.

The extrudate is conducted through the extruder at a throughput which is in the range from 10 kg/h to 600 kg/h, for example, in the range from 10 to 60 kg/h, preferably in the range from 20 kg/h to 50 kg/h, more preferably in the range from 30 kg/h to 40 kg/h, or alternatively in the range from 100 to 600 kg/h, preferably 300 to 600 kg/h and particularly preferably 400 to 550 kg/h. The specific mechanical energy input introduced by the extruder can be in the range from 10 Wh/kg to 120 Wh/kg, preferably in the range from 15 Wh/kg to 30 Wh/kg; overall, it depends on the raw material mixture. The holding time (residence time) is preferably at least 2 minutes, preferably at least 4 minutes.

If according to a preferred embodiment of the invention the (micro)pore formation is generated by means of a chemical reaction, a salt and an acid should preferably be added to the dry raw materials. Possible salts are, for example, sodium hydrogen carbonate or potassium hydrogen carbonate. Citric acid, tartaric acid or its salt and glucono delta-lactone can be used as acids. In addition, phosphate-containing acid carriers are suitable, such as disodium dihydrogen diphosphate or monocalcium orthophosphate. The mixing ratios here can vary to control the amount of gas released. Ratios of salt to acid in the range 1:1 to 6:1 are preferred. CO₂ or NH₃ is preferably released as the poreforming gas.

According to an alternative preferred embodiment of the invention the (micro)pore formation can also be carried out by introducing a gas (preferably compressed under pressure). Examples include CO₂, N₂ and SO₂. The gas, which can be liquid, compressed under pressure, can be passed into the extruder, for example, via a hose. The gas flow can be regulated by means of a solenoid valve and a flow meter. The gases are preferably added in in the range from 0.05 % to 5 %, based on the total weight of the raw materials metered into the extruder.

The process flexibility can be significantly increased by using a preconditioning step. The residence time of the protein matrix in the process can thus be influenced. The residence time in the preconditioner can be in the range from 3 s to 600 s, preferably in the range from 3 s to 60 s, particularly preferably in the range from 5 s to 15 s.

### B. Production of dry texturates

Producing dry texturates, preferably with the introduction of CO₂ or N₂, can be done as follows:
An extruder described above can be used, for example, the extruder PolyTwin BCTL-42 32L/D from Bühler.

The protein content in the raw materials is preferably in the range from 35 % to 90 %. The raw material can be in the form of a press cake, a concentrate or an isolate. For example, vegetable proteins such as legumes, cereals or algae can be used as proteins, but animal proteins such as whey protein or fungal proteins such as mycoprotein can also be used. The extrudate can contain water, bouillon and/or an oil-containing substance as liquids. The water content in the raw material at the time of the process should be at least 10 % and preferably 25 to 40 %.

The dry substances are metered into the extruder, where they are kneaded together with the liquid into a homogeneous composition under pressure (for example, in the range from 10 bar to 80 bar, preferably 20 bar to 40 bar) and the action of temperature. In the course of the method, the proteins are unfolded and align themselves to cross-linked filaments when they enter the cooling die. The composition heats up in the course of the process from ambient temperature to the temperature necessary for the denaturation of the proteins. For soy proteins, for example, this is about 140 °C.

Cellular material is added to the extrudate, as described above, at the desired region.

As with wet texturates, a cooling tool can also be used for dry texturates. This can be designed significantly shorter than that for wet texturates. The extrudate can be cut directly at the outlet from the die by means of a conventional extruder cutting apparatus.

The extrudate is conducted through the extruder at a throughput which is in the range from 100 kg/h to 1000 kg/h, for example, in the range from 100 kg/h to 200 kg/h, preferably from 130 kg/h to 160 kg/h, or in the range from 600 kg/h to 1000 kg/h. The specific mechanical energy input introduced by the extruder can be in the range from 50 Wh/kg to 200 Wh/kg, for example, in the range from 130 Wh/kg to 160 Wh/kg or in the range from 70 Wh/kg to 100 Wh/kg.

The process flexibility can be significantly increased by using an optional preconditioning step. The introduction of steam and/or water here, in particular hot water, can initiate the first unfolding of the protein structures in this way. The residence time in the preconditioner can be in the range from 3 s to 600 s, preferably in the range from 3 s to 60 s, particularly preferably in the range from 5 s to 20 s.
- Fig. 1: shows a first embodiment of a device according to the present invention with an inlet port that enters into a cooling die
- Fig. 2: shows a second embodiment of a device according to the present invention with an inlet port that enters into a distributor unit
- Fig. 3: shows a third embodiment of a device according to the present invention with an inlet port that enters into a co-extrusion die
- Fig. 4: shows a fourth embodiment of a device according to the present invention with an inlet port that enters into a last barrel housing of the extruder
- Fig. 5a: shows an embodiment of a heat exchange unit that can be arranged upstream the inlet port
- Fig. 5b: shows an embodiment of a screw arrangement at the location of the inlet port
- Fig. 6: shows an embodiment of a system according to the present invention

In the drawings, same reference numbers denote the same components.

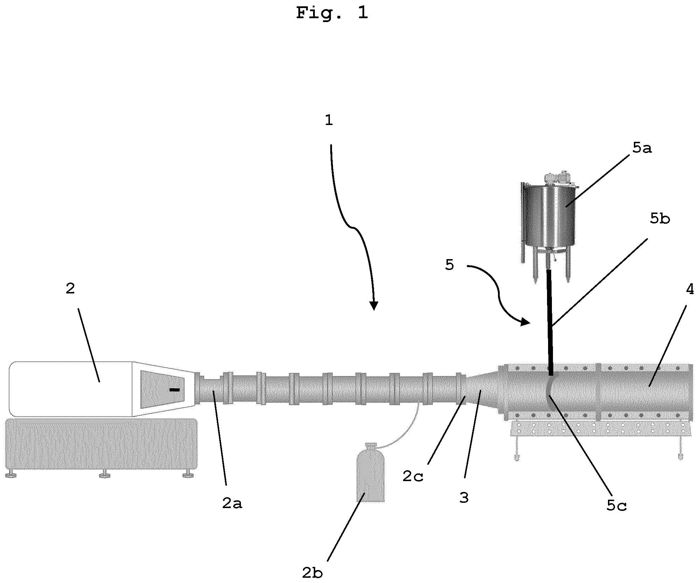

Fig. 1 shows a first embodiment of a device 1 according to the present invention with an inlet port 5 that enters into a cooling die 4. The device 1 comprises an extruder 2 with barrel housings 2a (in the embodiment in Fig. 1, 8 barrel housings are shown, but the extruder of the present invention is not limited to this number of barrel housings). The extruder 2 according to the embodiment of Fig. 1 furthermore comprises a gas inlet 2b with a gas storage container such as a pressurized bottle and a line through which gas can be led from said gas storage container into an extruder barrel housing 2a. It is noted that as discussed above the provision of such a gas inlet 2b is not necessary (for any of the embodiments of Figs. 1 to 4), since the present invention also comprises embodiments where gas is generated in the extruder by other means, or no gas is provided in the extruder at all.

In the embodiment of Fig. 1, downstream of the extruder exit 2c there is provided a distributor unit 3, which provides for distribution of the extrudate flow from the extruder exit 2c into flows channels of the cooling die 4 that is arranged downstream of the distributor unit 3. The cooling die 4 may comprise one or more flow channels, preferably one annular flow channel in the cylindrical wall of the cooling die 4.

In the embodiment of Fig. 1, an inlet port 5 is provided that comprises a vessel 5a in which cellular material can be stored or preferably a dispersion such as a slurry, more preferably a concentrated slurry of cellular material can be formed. From said vessel 5a, a line 5b leads into the cooling die 4 for conveying the cellular material into the cooling die 4. In the embodiment of Fig. 1, the line 5b is connected to the cooling die 4 via a plurality of, for example 5-10 openings that are combined in a single unit 5c that can be connected around the circumference of the cylindrical cooling die 4 that allows uniform insertion of the cellular material into the flow channels of the cooling die 4.

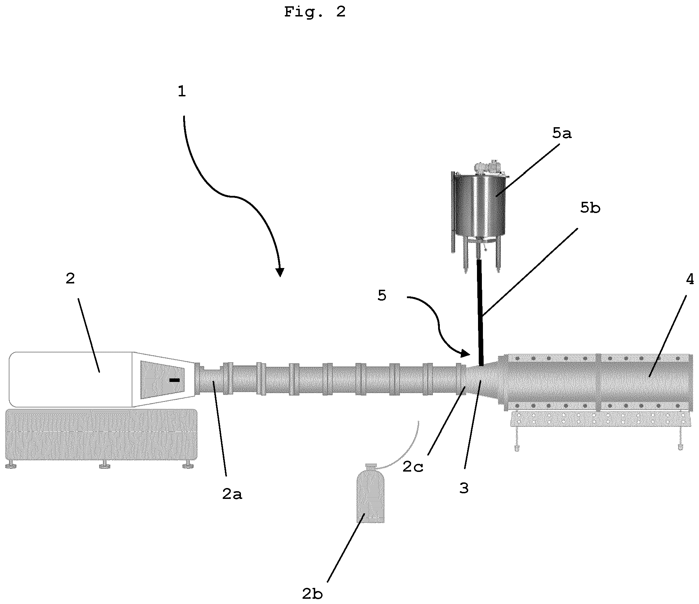

Fig. 2 shows a second embodiment of a device 1 according to the present invention. Said embodiment differs from the embodiment of Fig. 1 in that the inlet port 5 is connected with and leads into the distributor unit 3. The connection is such that the cellular material is conveyed into the distributor unit 3 and therein uniformly distributed to the flow channels in the cooling die 4. Preferably, the cellular material is conveyed into the distributor unit 3 at a point before distribution of the extrudate occurs.

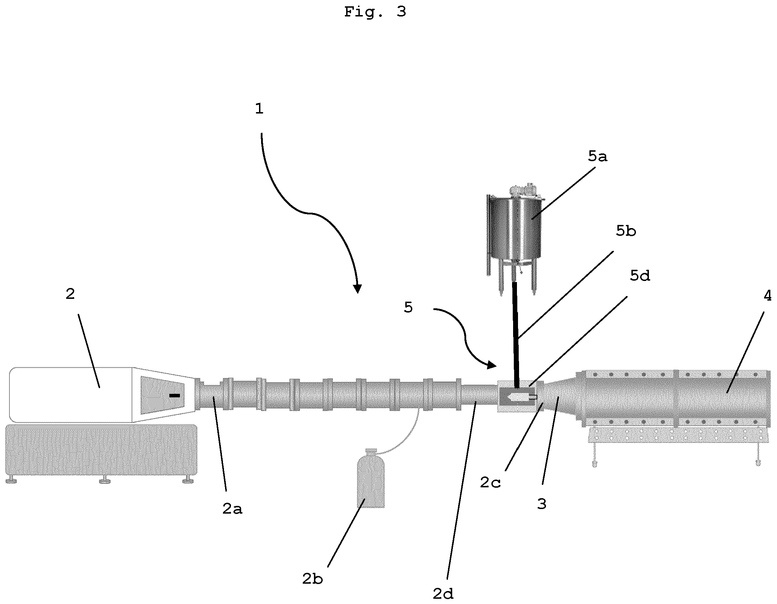

Fig. 3 shows a third embodiment of a device 1 according to the present invention. Said embodiment differs from the embodiments of Figs. 1 and 2 in that the inlet port 5 is connected with and leads into a co-extrusion die 5d that is provided upstream a distributor unit 3. In said co-extrusion die 5d, the extrudate flow from the extruder barrel housings and the flow of cellular material from the inlet port 5 are combined and extruder as one flow into the distributor unit 3. Co-extrusion dies are known.

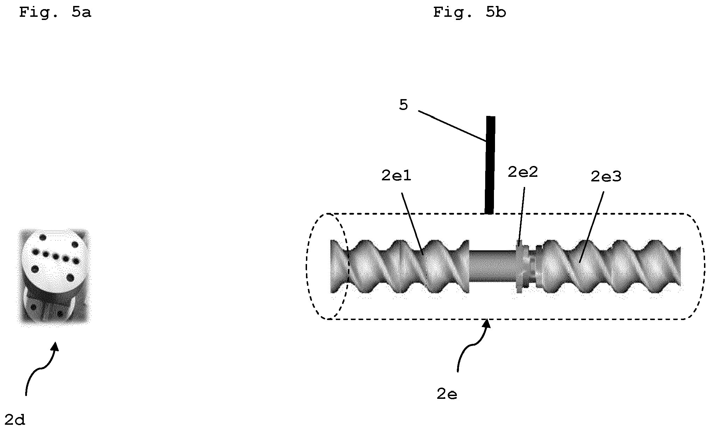

In the embodiment of Fig. 3, it is preferred that a heat exchange unit 2d (such as shown in Fig. 5a) is provided upstream of the co-extrusion die, so as to allow cooling of the extrudate from the extruder barrel housings before it enters the co-extrusion die 5d. In such way, damage of the cellular material entering the co-extrusion die 2d from the inlet port 5 can be prevented.

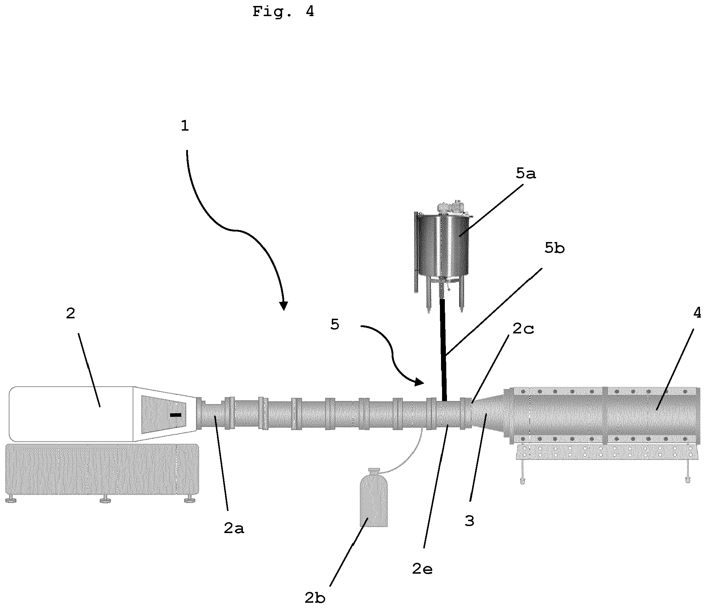

Fig. 4 shows a fourth embodiment of a device 1 according to the present invention. Said embodiment differs from the embodiments of Figs. 1 to 3 in that the inlet port 5 is connected with and leads into a last barrel housing of the extruder 2, which is designated as inlet barrel housing 2e. In order to prevent damage of cellular material entering into the inlet barrel housing 2e, preferably a screw configuration is provided in said inlet barrel housing 2e that minimizes any shear force exerted on the material in said inlet barrel housing 2e. This can be realized, for example, by the screw configuration shown in Fig. 5b.

Fig. 5a shows an embodiment of a heat exchange unit 2d that can be arranged upstream the inlet port 5 in the embodiment of the device 1 shown in Fig. 3.

Depending on the processing conditions applied in the extruder, a significant amount of heat may be generated, and said heat may cause damage on cellular material to be inserted through the inlet port 5. The provision of a heat exchange unit 2d in a region before the cellular material enters through the inlet port 5 serves for cooling the extrudate to a level that is acceptable for cellular material.

In the embodiment of Fig. 5a, the heat exchanger 2d is a shell-and-tube heat exchanger, in particular a tubular heat exchangers. In said heat exchanger 2d, the material is led from a first side of the heat exchanger through a cylindrical section with narrow channels to a second side of the heat exchanger, and thereby subjected to a homogeneous heat or cooling treatment.

Fig. 5b shows an embodiment of a screw arrangement at the location of the inlet port 5 in the embodiment of the device 1 shown in Fig. 4. Said screw arrangement is thus provided in the last barrel housing of the extruder, which is designated as inlet barrel housing 2e.

The screw arrangement comprises screw elements 2e1 that are located upstream the inlet port 5 and provide for kneading under high shear rates. In the section where the inlet port 5 enters into the inlet barrel housing 2e, only screw elements 2e2 are arranged that provide for gentle mixing and conveying, but do not provide for a high shear rate. As an example, a polygon disks is shown in Fig. 5b. Since the shear rate also depends on the process conditions such as throughput speed and screw speed applied in the extruder, under varying conditions different screw elements may be suitable. In principle, any screw element may be used in that region that does not damage cellular material inserted in said region.

Downstream the section where the inlet port 5 enters into the inlet barrel housing 2e, only screw elements 2e3 are arranged that provide for gentle conveying, but do not provide for a high shear rate.

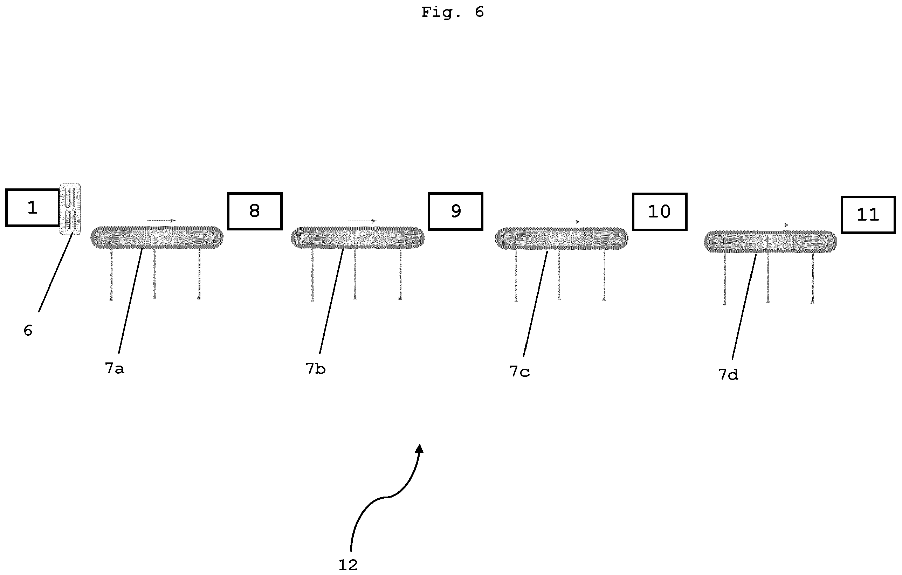

Fig. 6 shows an embodiment of a system 12 according to the present invention. Said system 12 comprises a device 1 according to the present invention, preferably a device as shown in any of Figs. 1 to 4, and additional units 6 to 11 discussed below. It is noted, however, that the sequence in which the units 6 to 11 are arranged in the embodiment of Fig. 6 is not compulsory and may be modified depending on specific requirements or preferences.

In the embodiment of Fig. 6, a cutting unit 6 is arranged directly at the exit of the cooling die of the device 1.

The cut material is then conveyed via a conveying unit 7a such as a conveyor belt to a cooling unit 8 where the material is further cooled. The cooling unit may be as discussed above a unit through with the material is conveyed and experiences a temperature gradient. However, the cooling unit could also be a nozzle that is arranged above the conveying unit 7a.

The cooled material is then conveyed via a conveying unit 7b such as a conveyor belt to an injection unit 9.

In the injection unit 9, additional components may be injected into the material, preferably via needles.

The provision of an injection unit 9 is preferred if in addition to the cellular material that it inserted into the extrudate through the inlet port of the device of the present invention, further components should be added. Those further components may be additional cellular material, flavoring components, nutrients (e.g. vitamins), or other additives commonly used for food products.

The material is then conveyed via a conveying unit 7c such as a conveyor belt to an incubation unit 10. In the incubation unit 10, the cellular material in the extrudate may be cultivated to a desired state. For example, incubation may be carried out under conditions that permit growth of cells in the extrudate.

The material is then conveyed via a conveying unit 7d such as a conveyor belt to a finishing unit 11. Finishing units for finishing an extrudate are also known in the art. Such units may provide for marinating, enrobing or encasing a product, for example.

## Claims

1. A device (1) for the manufacture of a product that imitates properties of meat and fish and their role in diets, comprising an extruder (2) and a cooling die (4) arranged downstream of the exit (2c) of the extruder, **characterized in that** an inlet port (5) for the insertion of cellular material is provided in a region of the extruder (2) in the vicinity of the extruder outlet (2c) to the outlet of the cooling die (4), preferably between the exit (2c) of the extruder (2) and the outlet of the cooling die (4).

2. The device according to claim 1, wherein the inlet port (5) is provided in a region of the extruder (2c) selected from the group of regions consisting of a region (2e) which is in the last quarter of the extruder length in front of the extruder exit (2c), a region of a distributor unit (3) between the exit of the extruder (2c) and the cooling die (4), or in a region of the cooling die (4).

3. Device according to any of the preceding claims, **characterized in that** a heat exchange unit (2d) is provided upstream of the inlet port (5) for the insertion of cellular material.

4. Device according to any of the preceding claims, **characterized in that** a screw element arranged in the product stream in the extruder adjacent to the exit (2c) of the extruder or adjacent to the region where inlet port (5) for the insertion of cellular material is provided is designed so as to enable a pressure reduction downstream of said screw element.

5. Device according to any of the preceding claims, **characterized in that** the cooling die (4) and optionally the distributor unit (3) and heat exchange unit (2d) are releasably provided at the exit of the extruder.

6. System (12) for the manufacture of a product that imitates properties of meat and fish and their role in diets, comprising a device (1) according to any of claims 1 to 5 and at least one unit (6, 7, 8, 9, 10, 11) arranged downstream of the device (1) for performing further processing steps.

7. A method for the manufacture of a product that imitates properties of meat and fish and their role in diets with a device (1) according to any of claims 1 to 5 or a system (12) according to claim 6, comprising the steps of:
a) metering raw materials into an extruder, wherein at least one raw material is a protein, preferably a vegetable protein, insect protein, cell protein including single cell protein, such as of yeast, bacteria, microalgae, fungi, fermented products derived from fermentation involving any of the above-mentioned organisms, mold and the like, or a mixture of different proteins, wherein the protein content in the dry raw materials is 35 to 90%, preferably greater than 50 % and is particularly preferably in the range from 60 % to 90 %;
b) mixing the raw materials in the extruder (2) to produce a mixture,
c) extruding the mixture to produce an extrudate,
d) inserting cellular material that would be adversely affected by the extrusion conditions applied in step c) into the extrudate in a region of the extruder in the vicinity of the extruder exit (2c) to the outlet of the cooling die (4), preferably between the exit (2c) of the extruder and the outlet of the cooling die (4),
e) leading the extrudate out through the cooling die (4) while cooling the extrudate to a temperature of less than 100 °C,
so as to obtain a product that imitates properties of meat and fish.

8. Method according to claim 7, **characterized in that** in step c) pores are formed in a controlled manner in the extrudate by providing a gas in the extruder (2), so as to obtain a foamed product.

9. Method according to claim 8, **characterized in that** in step c) the gas is provided in the extruder by introducing this gas, preferably selected from the group consisting of CO₂, N₂, N₂O or SO₂, into the extruder.

10. Method according to any of claims 7 to 9, **characterized in that** an additional post-processing step f) is carried out after step e), said additional post-processing step f) consisting of one or more steps selected from the group consisting or cooling, cutting, injecting further components, incubating, enrobing, encasing and marinating.

11. A product that imitates properties of meat and fish and their role in diets, obtainable by the method according to any one of claims 7 to 10, wherein said product is derived from
a raw material comprising a protein, preferably a vegetable protein, insect protein, cell protein including single cell protein, such as of yeast, bacteria, microalgae, fungi, fermented products derived from fermentation involving any of the above-mentioned organisms, mold and the like, or a mixture of different proteins, wherein the protein content in the dry raw materials is 35 to 90%, preferably greater than 50 % and is particularly preferably in the range from 60 % to 90 %, and
has an amount of cellular material in the range of 0.01-60 wt.-%, preferably 0.5-30 wt.-%, more preferably 1-25 wt.-%, even more preferably 5-20 wt.-% and especially preferred 10-15 wt.-%, based on the entire amount of the product.

12. The product according to claim 11, **characterized in that** the product has a protein content in the range from 15-30 wt.-%, preferably 19-23 wt.-% and a liquid content, preferably water content, of 45-70 wt.-%, preferably 55-65 wt.-%, and contains additional cellular material.

13. The product according to claim 11 or 12, **characterized in that** product has a fibrillar, porous, longitudinally oriented and cross-linked structure and exhibits a maximum force in the range from 10-50 N, preferably 15-40 N, more preferably 12-20 N, in longitudinal direction (F_{L}) and in the range from 10-90 N, preferably 15-70 N, and more preferably 15-50 N, in transversal direction (F_{T}).

14. The product according to any of claims 11 to 13, **characterized in that** the product has distributed pores having a diameter of approximately 0.1-1 mm with a narrow size distribution, and distributed closed cavities.

15. A method for retrofitting an extruder (2) so as to obtain a device according to any of claims 1 to 5, comprising the step of providing at the exit (2c) of the extruder either a cooling die (4) comprising an inlet port (5) for the insertion of cellular material, or a combination of a distributor unit (3) comprising an inlet port for the insertion of cellular material and a cooling die (4).
